# EUROPÄISCHE PATENTSCHRIFT

(11) **EP 1 242 501 B1**
(45) Veröffentlichungstag und Bekanntmachung des Hinweises auf die Patenterteilung: **03.09.2003**
(21) Anmeldenummer: 00983218.9
(22) Anmeldetag: 05.12.2000
(51) Int. Cl.: C08G 64/16

(54) **POLYETHERCARBONATE**
POLYETHER CARBONATES
POLYETHER-CARBONATES

(30) Priorität: 16.12.1999 DE 19960776
(43) Veröffentlichungstag der Anmeldung: 25.09.2002
(73) Patentinhaber: Bayer Aktiengesellschaft, 51368 Leverkusen (DE)
(72) Erfinder: KÖHLER, Burkhard, 51373 Leverkusen (DE); HORN, Klaus, 41539 Dormagen (DE); MEYER, Rolf-Volker, 53804 Much (DE)
(86) Internationale Anmeldenummer: EP0012195
(87) Internationale Veröffentlichungsnummer: WO01044346

(56) Entgegenhaltungen:
- DE-A- 3 308 691

## Beschreibung

Die Anmeldung betrifft neue verzweigte Polyetherester-, insbesondere Polyethercarbonate, die mit alpha-Halogencarbonsäureestern von Polyolen als Verzweiger hergestellt wurden, wobei der Verzweiger über Etherbrücken in das Polycarbonate eingebaut wird.

Verzweigte Polycarbonate sind bekannt (US-RE-27682 oder US-4 415 725). Sie werden üblicherweise durch die gemeinsame Phosgenierung von Bisphenolen in Gegenwart von Polyphenolen hergestellt. Sie sind wegen der Strukturviskosität ihrer Schmelze besonders gut geeignet für blow molding Prozesse, die z.B. zur Herstellung von Flaschen eingesetzt werden.

Die so hergestellten, verzweigten Polycarbonate haben allerdings für einige Anwendungen eine zu hohe Viskosität und eine relativ geringe Zähigkeit. Außerdem sind die Polyphenole oft nicht einfach technisch zugänglich und nur in begrenzter Auswahl vorhanden (siehe EP-A-819 718).

Aufgabe ist daher die Bereitstellung neuer verzweigter Polycarbonate mit verbesserten Viskosität- und Zähigkeitsverhalten.

Es wurde nun gefunden, dass bei der Phasengrenzflächenreaktion von Phosgen mit Diphenolen und speziellen Verzweigern verzweigte Polycarbonate, insbesondere Polyethercarbonate mit einer hohen Kerbschlagzähigkeit und Fließfähigkeit bei üblicher Strukturviskosität erhalten werden.

Gegenstand der Erfindung sind somit verzweigte Polyethercarbonate und, enthaltend als Verzweiger alpha-Halogencarbonsäureester von Polyolen, vorzugsweise mit der Funktionalität 3-30.

Gegenstand der Erfindung ist außerdem ein Verfahren zur Herstellung von insbesondere verzweigten Polyethercarbonaten durch Umsetzung von Diphenolen mit Phosgen und Verzweigern und gegebenenfalls Kettenabbrechern nach dem Zweiphasengrenzflächenverfahren, das dadurch gekennzeichnet ist, dass als Verzweiger alpha-Halogencarbonsäureester von Polyolen, vorzugsweise mit der Funktionalität 3-30 eingesetzt werden, sowie die danach erhältlichen Polycarbonate.

Vorzugsweise enthalten die erfindungsgemäßen Polycarbonate 0,05 bis 3 Mol-% der Verzweiger bzw. werden diese im erfindungsgemäßen Verfahren eingesetzt.

Vorzugsweise enthalten die Polycarbonate 0,5 bis 10 Mol-% Kettenabbrecher bzw. werden diese im erfindungsgemäßen Verfahren eingesetzt.

Die erfindungsgemäßen bzw. nach dem erfindungsgemäßen Verfahren erhältlichen Polyethercarbonate haben Gewichtsmittel Mw (ermittelt durch Gelchromatographie in bekannter Weise) von 5.000-200.000, vorzugsweise von 10.000 bis 50.000.

Die als Verzweiger eingesetzten Verbindungen sind an sich bekannt. Noch nicht bekannt und Gegenstand der Anmeldung ist die Verwendung dieser speziellen alpha-Halogencarbonsäureester von Polyolen, vorzugsweise mit der Funktionalität 3 bis 30, als Verzweiger bei der Herstellung von Polycarbonaten.

Erfindungsgemäß zu verwendende Verzweiger im Sinne der Erfindung sind vorzugsweise die vollständigen Veresterungsprodukte von:

Polyolen mit mindestens 3 OH-Gruppen, wie beispielhaft und vorzugsweise Pentaerythrit, Trimethylolpropan, Trimethylolethan, Glycerin, sowie die Oligomerisierungsprodukte dieser Polyole mit Oligomerisierungsgraden von 2-10, Sorbit, Mannit oder Styrol-Allylalkoholcopolymere mit einer Molmasse von 500 bis 3000 und einem Allylalkoholgehalt von 10 bis 50 Gew.-%, insbesondere Pentaerythrit, Trimethylolpropan und Trimethylolethan,
mit
1-Halogencarbonsäuren, wie beispielhaft und vorzugsweise Chloressigsäure, Bromessigsäure, Iodessigsäure, 1-Chlorpropionsäure, 1-Brompropionsäure, 1-Iodpropionsäure, 1-Chlorisobuttersäure, 1-Bromisobuttersäure, 1-Iodisobuttersäure, 1-Chlorphenylessigsäure, 1-Bromphenylessigsäure, 1-Iodphenylessigsäure, insbesondere Chloressigsäure.

Die Herstellung der erfindungsgemäßen alpha-Halogencarbonsäureester von Polyolen erfolgt nach allgemein bekannten Methoden, vorzugsweise durch Veresterung der Polyole mit den alpha-Halogencarbonsäuren, vorzugsweise in Gegenwart eines aceotropen Schleppers, wie z.B. Chlorbenzol, o-Dichlorbenzol, Xylol, Mesitylen, Toluol, Chloroform, vorzugsweise in Gegenwart eines Katalysators, wie z.B. Arylsulfonsäuren, Methansulfonsäure, Schwefelsäure, HCl, HBr, Borsäure, Phosphorsäure oder Zinn- oder Titanverbindungen.

Die Herstellung der erfindungsgemäßen alpha-Halogencarbonsäureester kann auch durch Umsetzung der Säurechloride der alpha-Halogencarbonsäuren mit den Polyolen in Gegenwart einer Base erfolgen.

Die Herstellung der erfindungsgemäßen alpha-Halogencarbonsäureester kann auch durch eine nachträgliche Halogenierung von Carbonsäureestern der Polyole erfolgen.

Für die Herstellung der erfindungsgemäßen Polycarbonate geeignete Diphenole der Formel (I)

HO-Z-OH (I)

mit vorzugsweise 6 bis 30 C-Atomen sind sowohl einkernige, als auch mehrkernige Diphenole, die Heteroatome enthalten können und unter den Bedingungen der Polycarbonatherstellung und deren thermischer Behandlung inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -ketone, -sulfoxide, -sulfone und á,á-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050 sowie in der Monographie "H. Schnell, Chemistry and Physics of Polycarbonates, Interscience Publishers, New York, 1964" beschrieben.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, ä,ä-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, ä,ä'-Bis-(3,5-dimethyl-4-hydroxyphenyl)-p-diisopropyl-benzol, 1,1-Bis-(4-hydroxyphenyl)-3,3,5-trimethylcyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methyl-cyclohexan, 2,2-Bis-(3,5-dichlor-4-hydroxyphenyl)-propan und 2,2-Bis-(3,5-dibrom-4-hydroxyphenyl)-propan.

### Besonders bevorzugte Diphenole sind z.B.:

2,2-Bis-(4-hydroxyphenyl)-propan,2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3-methylcyclohexan, 1,1-Bis-(3,5-dimethyl-4-hydroxyphenyl)-4-methylcyclohexan.

Insbesondere ist 2,2-Bis-(4-hydroxyphenyl)-propan und 1,1-Bis-(4-hydroxyphenyl)-3,3,5-trimethylcyclohexan bevorzugt.

Es können auch beliebige Mischungen der vorgenannten Diphenole verwendet werden.

Zwecks Verbesserung des Fließverhaltens können zusätzlich zu den erfindungsgemäßen Verzweigem auch geringe Mengen üblicher Verzweiger, vorzugsweise Mengen von 0,05 bis 2,0 Mol-% (bezogen auf Mole an eingesetzten Diphenolen), vorzugsweise tri- oder mehr als trifunktionellen Verbindungen, insbesondere solchen mit drei oder mehr als drei phenolischen Hydroxylgruppen in bekannter Weise mitverwendet werden. Einige der verwendbaren Verbindungen mit drei oder mehr als drei phenolischen Hydroxylgruppen sind beispielsweise 1,3,5-Tri-(4-hydroxyphenyl)-benzol, 1,1,1 -Tri-(4-hydroxyphenyl)-ethan, 2,6-Bis-(2-hydroxy-5'-methylbenzyl)-4-methylphenol, 2-(4-Hydroxyphenyl)-2-(2,4-dihydroxyphenyl)-propan, Hexa-(4-(4-hydroxyphenylisopropyl)-phenyl)-ortho-terephthalsäureester, Tetra-(4-hydroxyphenyl)-methan und 1,4-Bis-(4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Die erfindungsgemäße Herstellung der verzweigten Polyethercarbonate wird beispielhaft und vorzugsweise wie folgt durchgeführt:

Die einzusetzenden Diphenole werden in wässriger alkalischer Phase gelöst und vorgelegt. Dazu werden die zur Herstellung erforderlichen Mengen an Kettenabbrecher (0,5 bis 10 Mol-%) und als Verzweiger eingesetzten alpha-Halogencarbonsäureester von Polyolen (0,05 bis 3 Mol-%) in einem organischen Lösungsmittel gelöst oder in Substanz zugegeben. Dann wird in einer inerten, vorzugsweise Polycarbonat lösenden, beispielhaft und vorzugsweise Dichlormethan, die verschiedenen Dichlorethane und Chlorpropanverbindungen, Chlorbenzol und Chlortoluol, insbesondere Dichlormethan und Gemische aus Dichlormethan und Chlorbenzol, organischen Phase mit Phosgen umgesetzt. Die Reaktionstemperatur liegt im allgemeinen bei 0°C bis 40°C.

Geeignete Kettenabrecher sind z.B. Phenol oder p-tert.-Butylphenol, aber auch langkettige Alkylphenole wie 4-(1,3-Tetramethyl-butyl)-phenol gemäß DE-A 2 842 005 oder Monoalkylphenole oder Dialkylphenole mit insgesamt 8 bis 20 C-Atomen in den Alkylsubstituenten gemäß deutscher Patentanmeldung DE-A 3 506 472, wie z.B. p-Nonylphenol, 2,5-di-tert.-Butylphenol, p-tert.-Octylphenol, p-Dodecylphenol, 2-(3,5-Dimethylheptyl)-phenol und 4-(2,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (I.).

Die Zugabe der erforderlichen Kettenabbrecher und Verzweiger kann auch während der Phosgenierung erfolgen.

Geeignete organische Lösungsmittel für die Kettenabbrecher und Verzweiger sind beispielhaft und vorzugsweise Methylenchlorid, Chlorbenzol, Mischungen aus Methylenchlorid und Chlorbenzol, Aceton, Acetonitril, Toluol.

Der Einbau der erfindungsgemäß verwendeten Verzweiger in die Polymerkette erfolgt über eine Aryloxycarbonsäureester-Gruppe, wobei das Halogen in einer nucleophilen Substitution durch das Phenolat unter Bildung einer Ethergruppe verdrängt wird. Chloressigsäureester von Polyolen sind bevorzugt, weil in diesem Fall während der Polymersynthese nur Chloridionen (aus Phosgen und Verzweiger) entstehen.

Den erfindungsgemäßen verzweigten Polyethercarbonaten können noch vor oder nach ihrer Verarbeitung die für thermoplastische Polycarbonate üblichen Additive, wie Stabilisatoren, Entformungsmittel, Pigmente, Flammschutzmittel, Antistatika, Füllstoffe und Verstärkungsstoffe in den üblichen Mengen zugesetzt werden.

Das erfindungsgemäße Verfahren zur Herstellung der verzweigten Polyethercarbonate läßt sich auch auf verzweigte Polyetherestercarbonate ausdehnen, indem ein Teil der Carbonatspender durch reaktive Dicarbonsäurederivate, vorzugsweise durch aromatische Dicarbonsäurechloride, ersetzt wird. Die Polyetherestercarbonate deren Herstellung, Verwendung und die daraus hergestellten Gegenstände sind ebenfalls Gegenstand der Anmeldung.

Die erfindungsgemäßen verzweigten Polyethercarbonate zeigen, wie verzweigte Polycarbonate, eine Strukturviskosität, wodurch sie besonders gut geeignet sind für die Verarbeitung zu Hohlkörpern nach dem blow molding Prozess.

Die erfindungsgemäßen verzweigten Polyethercarbonate zeichnen sich durch eine besonders gute Zähigkeit und Fließfähigkeit aus.

Die erfindungsgemäßen Polycarbonate werden als thermoplastische Formmassen zur Herstellung von Formkörpern, insbesondere zur Herstellung von Hohlkörpern nach dem blow molding Verfahren verwendet. Gegenstand der Anmeldung ist somit auch diese Verwendung sowie die aus den erfindungsgemäßen Polycarbonat-Formmassen hergestellten Formkörper bzw. Hohlkörper.

Die Herstellung der Formkörper bzw. Hohlkörper erfolgt nach an sich bekannten Methoden beispielsweise durch Extrusion oder Spritzguss insbesondere ....

Die erfindungsgemäßen Formkörper bzw. Hohlkörper wie z.B. Flaschen, Gehäuse für elektrische Geräte, Haushaltsgeräte, Spielzeug oder Formkörper die im Automobilbau, für optische Geräte und auf dem Elektrosektor eingesetzt werden, zeichnen sich durch eine verbesserte Zähigkeit und Schlagfestigkeit aus.

Die nachfolgende Beispiele dienen zur Erläuterung der Erfindung. Die Erfindung ist nicht auf die Beispiele beschränkt.

### Beispiele

### Beispiel 1

Man mischt 100 g Pentaerythrit, 400 g Chloressigsäure, 300 ml o-Dichlorbenzol und 2 g p-Toluolsulfonsäure und erhitzt solange auf 160°C, bis kein Wasser mehr abdestilliert. Man wäscht die organische Phase dreimal mit Wasser und einmal mit 5 proz. Natronlauge, wobei das Produkt ausfällt. Man saugt ab, wäscht mit Petrolether und trocknet im Vakuum. Man erhält 251 g Pentaerythrit-tetrachloracetat (Strukturbeweis durch 1H-NMR).

### Beispiel 2

Man mischt 100 g Trimethylolpropan, 400 g Bromessigsäure, 400 ml o-Dichlorbenzol und 2 g p-Toluolsulfonsäure und erhitzt solange auf 160°C bis kein Wasser mehr abdestillert. Man wäscht die organische Phase einmal mit Wasser, zweimal mit 5 proz. Natronlauge und zweimal mit Wasser. Man destilliert im Vakuum (1Torr) alle bis 120°C flüchtigen Bestandteile ab. Man erhält 281 g Trimethylolpropan-tribromacetat (Strukturbeweis durch 1H-NMR).

### Beispiel 3

Man legt 7822 g 45 proz. Natronlauge, 40 kg Wasser, 4566 g Bisphenol-A, 10 l Chlorbenzol, 30 l Methylenchlorid, 25,4g Trimethylolpropan-tribromacetat (0,5 Gew.-%) als Verzweiger, 105 g p-tert-Butylphenol (3,5 Mol-%) und 28 ml N-Ethylpiperidin vor und leitet bei 20°C 3200 g Phosgen ein und rührt noch 1 h. Man säuert mit HCl an, trennt die organische Phase ab und dampft sie auf einem Ausdampfextruder (280°C, Vakuum) ein. Man erhält 4350 g erfindungsgemäß verzweigte Polyethercarbonat.

### Beispiel 4

Man verfährt wie in Beispiel 3 beschireben, wobei als Verzweiger 25,4 g Pentaerythrit-tetrachloracetat eingesetzt werden. Man erhält 4350 g erfindungsgemäß verzweigtes Polyethercarbonat.

### Vergleichsbeispiel 1

Man verfährt wie in Beispiel 3 beschrieben, wobei als Verzweiger 25,4 g 1,1,1-Trihydroxyphenylethan eingesetzt werden. Man erhält 4340 g verzweigtes Polycarbonat.

| | Viskosität 300°C Scherung Eta 10 (Pa s) | Viskosität 300°C Scherung Eta 1000 (Pa s) | Eta 10: Eta 1000 | Kerbschlagzähigkeit ak bei 0°C (kJ/m²) |
|---|---|---|---|---|
| Beispiel 3 | 672 | 352 | 1,9 | 93 |
| Beispiel 4 | 792 | 420 | 1,9 | 93 |
| Vergleich 1 | 1103 | 584 | 1,9 | 78 |

Die erfindungsgemäßen verzweigten Polyethercarbonate weisen die gleiche Strukturviskosität auf (Quotient aus der Viskostät bei Eta 10 / Eta 1000 als Maß), zeichnen sich jedoch durch eine bessere Fließfähigkeit und eine besserer Kerbschlagzähigkeit aus.

## Patentansprüche

1. Verzweigte Polyethercarbonate und Polyetherestercarbonate, enthaltend als Verzweiger alpha-Halogencarbonsäureester von Polyolen.

2. Polyethercarbonate und Polyetherestercarboante nach Anspruch 1, enthaltend als Verzweiger Pentaerytrit-tetrachloracetat und/oder Trimethylolpropan-trichloracetat und/oder Trimethylolethan-trichloracetat.

3. Verfahren zur Herstellung von verzweigten Polyethercarbonaten durch Umsetzung von Diphenolen mit Phosgen und Verzweigern und gegebenenfalls Kettenabbrechern nach dem Zweiphasengrenzflächenverfahren, das **dadurch gekennzeichnet ist, dass** als Verzweiger alpha-Halogencarbonsäureester von Polyolen eingesetzt werden.

4. Polyethercarbonate erhältlichen nach dem Verfahren wie in Anspruch 3 definiert.

5. Verfahren zur Herstellung von verzweigten Polyetherestercarbonaten durch Umsetzung von Diphenolen mit Phosgen und Verzweigern und gegebenenfalls Kettenabbrechern nach dem Zweiphasengrenzflächenverfahren, das **dadurch gekennzeichnet ist, dass** als Verzweiger alpha-Halogencarbonsäureester von Polyolen eingesetzt werden und ein Teil der Carbonatspender durch reaktive Dicarbonsäurederivate ersetzt werden.

6. Polyetherestercarbonate erhältlich nach dem Verfahren wie in Anspruch 5 definiert.

7. Verfahren nach mindestens einem der Ansprüche 2 und 5, wobei 0,5 bis 10 Mol-% Kettenabbrechern und 0,05 bis 3 Mol-% Verzweigern eingesetzt werden.

8. Verwendung von alpha-Halogencarbonsäureester von Polyolen als Verzweiger zur Herstellung von Polyethercarbonaten bzw. Polyetherestercarbonaten.

9. Verwendung der Polyethercarbonate und Polyetherestercarbonate zur Herstellung von Formkörpem und Hohlkörper.

10. Formkörper hergestellt aus Polyether- und/oder Polyetherestercarbonaten wie in den obigen Ansprüchen definiert.

11. Formmassen enthaltend Polyether- und/oder Polyetherestercarbonate wie in den obigen Ansprüchen definiert.

12. Form- und Hohlkörper enthaltend Polyether- und/oder Polyetherestercarbonate wie in den obigen Ansprüchen definiert.

13. Verwendung der Polymerverbindungen nach Anspruch 1 zur Herstellung von Hohlkörpern nach dem blow molding Verfahren.

## Claims

1. Branched polyether carbonates and polyether ester carbonates containing alpha-halogenated carboxylic acid esters of polyols as branching agents.

2. Polyether carbonates and polyether ester carbonates according to claim 1, containing pentaerythritol tetrachloroacetate and/or trimethylolpropane trichloroacetate and/or trimethylolethane trichloroacetate as branching agents.

3. Process for the production of branched polyether carbonates by the reaction of diphenols with phosgene and branching agents and optionally chain terminators by the two-phase boundary process, which is **characterised in that** alpha-halogenated carboxylic acid esters of polyols are used as branching agents.

4. Polyether carbonates obtainable by the process as defined in claim 3.

5. Process for the production of branched polyether ester carbonates by the reaction of diphenols with phosgene and branching agents and optionally chain terminators by the two-phase boundary process, which is **characterised in that** alpha-halogenated carboxylic acid esters of polyols are used as branching agents and some of the carbonate donors are replaced by reactive dicarboxylic acid derivatives.

6. Polyether ester carbonates obtainable by the process as defined in claim 5.

7. Process according to at least one of claims 2 and 5, wherein 0.5 to 10 mole % chain terminators and 0.05 to 3 mole % branching agents are used.

8. Use of alpha-halogenated carboxylic acid esters of polyols as branching agents for the production of polyether carbonates or polyether ester carbonates.

9. Use of the polyether carbonates and polyether ester carbonates for the production of mouldings and hollow articles.

10. Mouldings produced from polyether carbonates and/or polyether ester carbonates as defined in any of the above claims.

11. Moulding compositions containing polyether carbonates and/or polyether ester carbonates as defined in any of the above claims.

12. Mouldings and hollow articles containing polyether carbonates and/or polyether ester carbonates as defined in any of the above claims.

13. Use of the polymer compounds according to claim 1 for the production of hollow articles by the blow-moulding process.

## Revendications

1. Polyéther-carbonates et polyéther-ester-carbonates ramifiés, contenant comme agent de - ramification, des esters d'acide alpha-halogénocarboxylique de polyol.

2. Polyéther-carbonates et polyéther-ester-carbonates suivant la revendication 1, contenant comme agent de ramification, le tétrachloroacétate de pentaérythritol et/ou le trichloroacétate de triméthylolpropane et/ou le trichloroacétate de triméthyloléthane.

3. Procédé de préparation de polyéther-carbonates ramifiés par réaction de diphénols avec le phosgène et un agent de ramification, et le cas échéant, un interrupteur de chaine, par le procédé interfacial, qui est **caractérisé en ce que** comme agent de ramification, on met en oeuvre un ester d'acide alpha-halogénocarboxylique de polyol.

4. Polyéther-carbonates accessibles par le procédé comme défini à la revendication 3.

5. Procédé de préparation de polyéther-ester-carbonates ramifiés par réaction de diphénols avec le phosgène et un agent de ramification, et le cas échéant, un interrupteur de chaine, par le procédé interfacial, qui est **caractérisé en ce que** comme agent de ramification, on met en oeuvre un ester d'acide alpha-halogénocarboxylique de polyol et **en ce qu'**une partie du dispensateur de carbonate est remplacée par un dérivé réactif d'acide dicarboxylique.

6. Polyéther-ester-carbonates accessibles par le procédé comme défini à la revendication 3.

7. Procédé suivant au moins l'une des revendications 2 et 5, où 0,5 à 10% en moles d'interrupteur de chaîne et 0,05 à 3% en moles d'agent de ramification sont mis en oeuvre.

8. Utilisation d'esters d'acides alpha-halogénocarboxyliques de polyols comme agent de ramification pour la préparation de polyéther-carbonates ou de polyéther-ester-carbonates.

9. Utilisation des polyéther-carbonates et des polyéther-ester-carbonates pour la préparation d'articles moulés et de corps creux.

10. Articles moulés préparés à partir des polyéther-carbonates et/ou polyéther-ester-carbonates comme définis dans les revendications ci-dessus.

11. Matières à mouler contenant les polyéther-carbonates et/ou polyéther-ester-carbonates comme définis dans les revendications ci-dessus.

12. Articles moulés et corps creux contenant les polyéther-carbonates et/ou polyéther-ester-carbonates comme définis dans les revendications ci-dessus.

13. Utilisation des composés polymères suivant la revendication 1, pour la préparation de corps creux par le procédé de moulage-soufflage.
